Europäisches Patentamt

European Patent Office

Office européen des brevets

(11) Veröffentlichungsnummer: **0 158 055**
**A1**

(12) **EUROPÄISCHE PATENTANMELDUNG**

(21) Anmeldenummer: **85101762.4**

(22) Anmeldetag: **18.02.85**

(51) Int. Cl.⁴: **G 11 B 27/02**
**H 04 H 7/00**

(30) Priorität: **06.03.84 CH 1098/84**

(43) Veröffentlichungstag der Anmeldung:
**16.10.85 Patentblatt 85/42**

(84) Benannte Vertragsstaaten:
**AT BE CH DE FR GB IT LI NL SE**

(71) Anmelder: **Willi Studer AG, Fabrik für elektronische Apparate
Althardstrasse 30
CH-8105 Regensdorf(CH)**

(72) Erfinder: **Weiss, Daniel
Bertastrasse 6
CH-8610 Uster ZH(CH)**

(72) Erfinder: **Lagadec, Roger, Dr.
Schulstrasse 22
CH-8153 Rümlang ZH(CH)**

(54) Verfahren zur Ueberblendung digitaler Audiosignale, sowie Vorrichtung zur Durchfahrung des Verfahrens.

(57) Bei solchen Verfahren zur Ueberblendung eines ersten Audiosignales mit einem weiteren Audiosignal, werden üblicherweise die Amplitudenwerte des ersten Audiosignales schrittweise vermindert, während Amplitudenwerte des weiteren Audiosignales schrittweise vergrössert und mit den Amplitudenwerten des ersten Audiosignales gemischt werden.

Um während des Ueberblendungsvorgangs mehrere Parameter verändern zu können und somit grössere Flexibilität zu erlangen, werden die Audiosignale einem Filter (2, 3) zugeführt, wo deren Frequenzspektren gemäss wählbaren Funktionen verändert werden können.

Fig. 1

Verfahren zur Ueberblendung digitaler Audiosignale
sowie Vorrichtung zur Durchführung des Verfahrens

Die Erfindung betrifft ein Verfahren zur Ueberblendung eines ersten digitalen Audiosignales durch ein weiteres digitales Audiosignal sowie eine Vorrichtung zur Durchführung des Verfahrens.

Ein solches Verfahren und eine solche Vorrichtung sind aus dem US-Patent Nr. 4 327 382 bereits bekannt. Bei diesem Verfahren werden zwei Audiosignale, von denen das eine das andere überblenden soll, in je einer Multiplikationsstufe mit einem mit der Zeit variablen Faktor multipliziert. Dabei vergrössert sich der eine Faktor schrittweise von Null auf Eins, während der andere Faktor sich schrittweise von Eins auf Null verkleinert, wobei die Summe der beiden Faktoren zu bestimmten Zeitpunkten immer Eins ergibt. Die so multiplizierten Signale werden zusammen addiert und ergeben zusammen ein Ausgangssignal.

Bei solchen Verfahren kann die Art der Ueberblendung nur beeinflusst oder verändert werden, indem man die Funktion verändert, gemäss welcher sich die einzelnen Faktoren ergeben. Gemäss solcher Funktionen ergeben sich Faktoren, die für jeden oder für aufeinanderfolgende Gruppen von Abtastzeitpunkten wieder geändert sind. Dabei kann die Differenz aufeinanderfolgender Faktoren über das ganze Ueberblendintervall gesehen konstant oder veränderlich sein. Variationsmöglichkeiten beschränken sich somit darauf, zu entscheiden, welcher Gesetzmässigkeit diese Differenzen zu folgen haben.

Die Erfindung, wie sie in den Ansprüchen gekennzeichnet ist, löst die Aufgabe ein Verfahren und eine Vorrichtung zu schaffen, mit welchen die Ueberblendung von digitalen Signalen flexibler gestaltet und durch Verändern einer grösseren Anzahl von Parametern stärker variiert werden kann.

0158055

Die durch die Erfindung erreichten Vorteile sind im wesentlichen darin zu sehen, dass die Anzahl der Möglichkeiten sowie die Art der verschiedenen Möglichkeiten ein Ueberblendintervall zu gestalten wesentlich erweitert ist. So können beispielsweise gewisse Frequenzen des einen Signales vorab eliminiert oder eben während des ganzen Ueberblendintervalles aufrechterhalten werden. Die Anwendung dieser Erfindung bleibt dabei nicht nur auf die Gestaltung von Diskontinuitäten, von Schnittstellen usw. in einer Aufzeichnung beschränkt. Ebenso lassen sich gemäss der Erfindung auch längere Abschnitte, beispielsweise einer Musikaufzeichnung mit Hilfe der Filter so gestalten, dass interessante Effekte entstehen.

Im folgenden wird die Erfindung anhand von lediglich einen Ausführungsweg darstellenden Zeichnungen näher erläutert. Es zeigen:

Figur 1 in schematischer Darstellung eine Vorrichtung zum Ueberblenden von digitalen Signalen,

Figuren 2a bis e eine Folge verschiedener Frequenzspektren für ein erstes Audiosignal,

Figuren 2f bis k eine Folge verschiedener Frequenzspektren für ein weiteres Audiosignal,

Figur 3a und b je mehrere Folgen von Filterkoeffizienten.

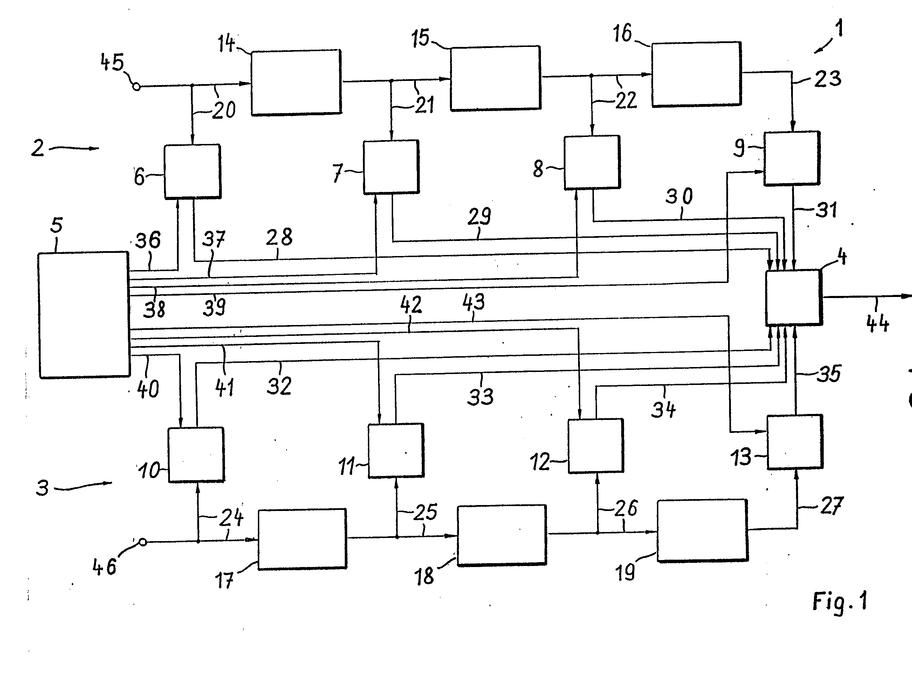

Figur 1 zeigt eine Vorrichtung 1, die aus zwei Filtern 2 und 3 besteht. Stattdessen können die beiden Filter 2 und 3 ebensogut als Filterhälften 2 und 3 eines einzigen Filters betrachtet werden. Als weitere Hauptelemente der Vorrichtung 1 sind eine Additionseinheit 4 und ein Koeffizientengenerator 5 zu erkennen.

Die Filter 2 und 3 sind in diesem Ausführungsbeispiel als Transversalfilter ausgebildet. Es wäre aber ebenso denkbar, diese als Rekursivfilter oder als Filter einer weiteren Art auszubilden. Die Filter 2 und 3 bestehen unter anderem aus Multiplikationseinheiten 6, 7, 8, 9 und 10, 11, 12, 13. Weiter weisen die Filter 2 und 3 Speicher 14, 15, 16 und 17, 18, 19 auf. Leitungen 20, 21, 22 und 23 stellen Verbindungen her zwischen den Multiplikationseinheiten 6, 7, 8, 9 und den Speichern 14, 15, 16. Im Filter 3 stellen Leitungen 24, 25, 26 und 27 Verbindungen her zwischen den Multiplikationseinheiten 10, 11, 12, 13 und den Speichern 17, 18, 19.

Leitungen 28, 29, 30 und 31 stellen Verbindungen her zwischen den Multiplikationseinheiten 6, 7, 8, 9 und der Additionseinheit 4 im Filter 2.

0158055

Im Filter 3 stellen Leitungen 32,33,34 und 35 Verbindungen her zwischen den Multiplikationseinheiten 10,11,12,13 und der Additionseinheit 4.

Der Koeffizientengenerator 5 ist einerseits über Leitungen 36,37,38,39 mit den Multiplikationseinheiten 6,7,8,9 und andererseits über Leitungen 40,41,42,43 mit den Multiplikationseinheiten 10,11,12,13 verbunden. Ein Ausgang 44 dient der Ausgabe von Signalen aus der Vorrichtung 1. Koeffizientengeneratoren sind Elemente, die für digitale Filter allgemein bekannt sind. Ein solcher ist aus der genannten US-4 327 382 ebenfalls bekannt.

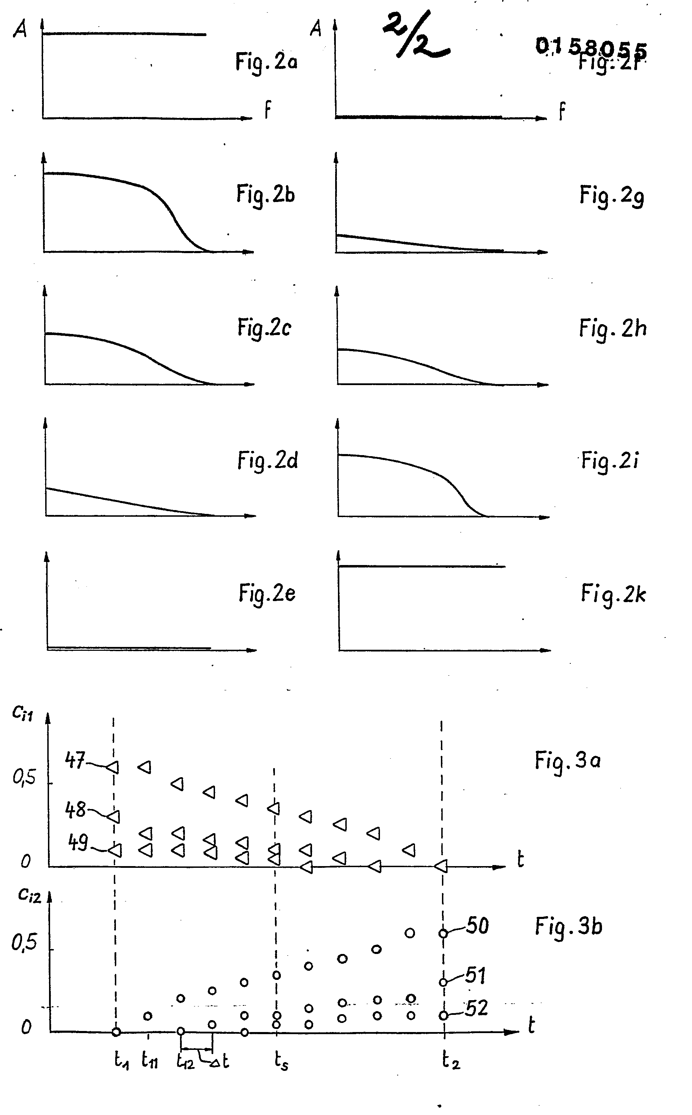

Figur 2 zeigt je eine zeitliche Folge von Frequenzspektren für ein erstes Zwischensignal und ein zweites Zwischensignal, bevor diese in der Additionseinheit 4 zusammengeführt werden. Ueber der horizontalen Achse ist jeweils die Frequenz f über der vertikalen Achse die Amplitude A aufgetragen. Die Figuren 2a und 2k zeigen je unveränderte Frequenzspektren für das eine wie für das andere Audiosignal, wobei alle Frequenzen durchgelassen werden. Die Figuren 2e und 2f zeigen Frequenzspektren für das eine wie auch für das andere Audiosignal, wobei alle Frequenzen unterdrückt werden. Die Figuren 2b, 2c, 2d und 2g, 2h, 2i zeigen Frequenzspektren für das erste und das weitere Audiosignal, wie sie von den Filtern 2 und 3 zu verschiedenen Zeitpunkten im Ueberblendungsintervall durchgelassen werden.

Figur 3a zeigt Folgen von Filterkoeffizienten für das eine Filter, während Figur 3b entsprechende Folgen von Filterkoeffizienten für das andere Filter zeigt. Dabei ist über den horizontalen Achsen die Zeit t und über den vertikalen Achsen der Betrag der Filterkoeffizienten c, der maximal Eins betragen kann, aufgetragen. Mit $t_1$ ist der Beginn, mit $t_2$ das Ende des Ueberblendungsintervalles $t_2-t_1$ bezeichnet, $t_s$ bezeichnet einen Referenzzeitpunkt bezüglich dem, unter gewissen Bedingungen die Folgen der Filterkoeffizienten des einen und des anderen Filters 2,3 symmetrisch verlaufen. Mit $\Delta t$ ist ein Abtastintervall angegeben. Ein Abtastintervall entspricht der Zeitdifferenz zwischen aufeinanderfolgenden Abtastzeitpunkten oder Zeitpunkten zu denen Werte eines digitalen Signales auftreten.

Da die Vorrichtung gemäss Figur 1 zwei Eingänge 45 und 46 aufweist, soll der Fall betrachtet werden, wonach ein Ueberblendvorgang zwischen zwei Audiosignalen stattfindet.

Abtastwerte eines ersten Audiosignales treffen am Eingang 45 in Abtastintervallen auf. Ueber Leitung 20 gelangt ein erster Abtastwert sowohl in die Multiplikationseinheit 6, als auch in den Speicher 14, der wie die anderen Speicher 15,16,17,18,19 als Verzögerungsschaltung wirkt. Die ganze Vorrichtung 1 wird in an sich bekannter und deshalb hier nicht näher dargestellter Weise durch Taktsignale gesteuert. So wird der Multiplikationseinheit 6 über Leitung 36 zu diesem Zeitpunkt ein erster Filterkoeffizient zugeführt, mit dem dieser erste Abtastwert multipliziert und anschliessend über Leitung 28 der Additionseinheit 4 zugeführt wird. Dort wird dieser Wert gespeichert.

Unterdessen, das heisst während des ersten betrachteten Abtastintervalles wird der erste Abtastwert unverändert im Speicher 14 aufbewahrt. Nach Ablaufen des ersten Abtastintervalles trifft ein zweiter Abtastwert am Eingang 45 ein. Zu diesem Zeitpunkt wird der erste Abtastwert aus dem Speicher 14 über Leitung 21 in die Multiplikationseinheit 7 sowie in den Speicher 15 befördert und der zweite Abtastwert gelangt über Leitung 20 in die Multiplikationseinheit 6 und den Speicher 14. Nach Ablauf des ersten Abtastintervalles erhalten nun die beiden Multiplikationseinheiten 6 und 7 je einen Filterkoeffizienten über die Leitungen 36 und 37 zugeführt, so dass die Multiplikationseinheit 7 den ersten Abtastwert mit dem Filterkoeffizienten und die Multiplikationseinheit 6 den zweiten Abtastwert mit einem weiteren Filterkoeffizienten multipliziert. Beide Multiplikationseinheiten 6 und 7 befördern die mit den Filterkoeffizienten multiplizierten Abtastwerte über die Leitungen 28 und 29 in die Additionseinheit 4, wo sie gespeichert werden.

Trifft nach zwei Abtastintervallen ein dritter Abtastwert am Eingang 45 ein, so wiederholt sich die ganze Kette von Vorgängen. Der erste Abtastwert gelangt nun in den Speicher 16 und in die Multiplikationseinheit 8, der zweite Abtastwert gelangt in den Speicher 15 und in die Multiplikationseinheit 7 und der dritte Abtastwert gelangt in den Speicher 14 und in die Multiplikationseinheit 6. Entsprechende Filterkoeffizienten gelangen vom Koeffizientengenerator 5 über Leitungen 36,37 und 38 in die Multiplikationseinheiten usw. Die Speicher 14,15,16 und 17, 18,19 wirken wie je ein Schieberegister.

Trifft der erste der betrachteten Abtastwerte eines Audiosignales in der Additionseinheit 4 aus der letzten Multiplikationseinheit 9 kommend über Leitung 31 ein, so werden zu diesem mit einem Filterkoeffizienten multiplizierten Abtastwert in diesem Beispiel drei weitere (entsprechend der Anzahl vorausgehender Multiplikationseinheiten) Abtastwerte zugezählt, die bereits in der Additionseinheit 4 gespeichert sind. Dieser Abtastwert wird mit einem weiteren im Filter 3 auf dieselbe Weise behandelten Abtastwert kombiniert und über den Ausgang 44 ausgegeben.

Solange keine Ueberblendung von Signalen stattfinden soll, wirken die beiden Filter 2 und 3 zusammen wie beispielsweise ein Schalter. Sollen beispielsweise Abtastwerte eines Signales unverändert vom Eingang 45 zum Ausgang 44 gelangen, so multipliziert die Multiplikationseinheit 6 die Abtastwerte mit dem Filterkoeffizienten Eins und die übrigen Multiplikationseinheiten 7,8,9 des Filters 2 und 10,11,12,13 des Filters 3 multiplizieren die Abtastwerte mit den Filterkoeffizienten Null.

Dasselbe gilt für die abgeschlossene Ueberblendung zweier Audiosignale, wenn dasjenige Audiosignal ausgeblendet ist, welches über den Eingang 46 eintrifft oder umgekehrt, wenn das ausgeblendete Audiosignal über den Eingang 45 eintrifft.

Durch entsprechende Ausgabe von Filterkoeffizienten können die Audiosignale auch verzögert werden. Wird beispielsweise der Multiplikationseinheit 12 der Filterkoeffizient Eins, den übrigen Multiplikationseinheiten der Filterkoeffizient Null zugeführt, so wird das am Eingang 46 eintretende Audiosignal um je ein Abtastintervall in den Speichern 17 und 18 verzögert.

Bei normaler Ueberblendung zweier Audiosignale wird die Summe aller Filterkoeffizienten, die zu einem Abtastzeitpunkt vom Koeffizientengenerator 5 ausgegeben wird, Eins ergeben. Sie kann aber in besonderen Fällen oder zur Erzielung besonderer Effekte auch zeitweise Eins überschreiten oder unterschreiten.

Mathematisch ausgedrückt wird in den Filtern 2 und 3 ein Ausgangssignal X als Folge einer Zeitfunktion (nT) gemäss der folgenden Formel erzeugt:

$$X\,(nT) = \sum_{j=0}^{N-1} C_{i1}\,(nT) \cdot Y_1\,(nT\text{-}jT) + \sum_{j=0}^{N-1} C_{i2}\,(nT) \cdot Y_2\,(nT\text{-}jT) + \text{---}.$$

Dabei bedeuten:

$Y_1$   die Abtastwerte des ersten Audiosignales

$Y_2$   die Abtastwerte des zweiten Audiosignales

$C_{i1}$   die Filterkoeffizienten des ersten Audiosignales

$C_{i2}$   die Filterkoeffizienten des zweiten Audiosignales

$N$   die Filterlänge entsprechend der Anzahl Multiplikationseinheiten.

Beispiele von Folgen solcher Filterkoeffizienten $C_{i1}$, $C_{i2}$ sind in Figur 3a und 3b dargestellt. Figur 3a zeigt drei Folgen von Filterkoeffizienten, jede davon beginnend mit Filterkoeffizienten 47,48 und 49. Figur 3b zeigt drei weitere Folgen von Filterkoeffizienten für das andere Filter, endend mit Filterkoeffizienten 50,51,52. In jedem der elf gezeigten Abtastzeitpunkte

$t_1$ bis $t_2$ ergibt die Summe der Filterkoeffizienten aus den Figuren 3a und 3b zusammen Eins. Zudem sind jeweils zwei Folgen, je eine aus Figur 3a und eine aus Figur 3b symmetrisch bezüglich dem Referenzzeitpunkt $t_s$. In der Figur 3a variiert die Summe der Filterkoeffizienten von Eins bis Null, in Figur 3b von Null bis Eins.

Soll beispielsweise eine Ueberblendung zweier Signale mit Hilfe der Filter 2 und 3 und mit den Filterkoeffizienten aus den Figuren 3a und 3b erfolgen, so kann angenommen werden, dass das erste Signal über den Eingang 45 und das zweite Signal über den Eingang 46 eingegeben wird. Die Filterkoeffizienten aus Figur 3a werden zur Filterung des ersten Signales, die Filterkoeffizienten aus Figur 3b zur Filterung des zweiten Signales verwendet.

Vor der Zeit t 1 (Fig. 3) wird nur das erste Signal am Ausgang 44 erwartet. Die Multiplikationseinheit 6 erhält vom Koeffizientengenerator 5 über Leitung 36 einen Filterkoeffizienten mit dem Wert 1. Alle anderen Multiplikationseinheiten 7 bis 13 erhalten Filterkoeffizienten mit dem Wert 0. Trotzdem werden laufend die Werte aus denen das erste Signal besteht, in die Speicher 14, 15 und 16 eingegeben. Sie werden nicht weiterverarbeitet, aber nach jedem Abtastintervall oder Takt durch einen neuen Wert ersetzt. Das erste Signal erreicht deshalb nur über Leitung 20, die Multiplikationseinheit 6, die Leitung 28 und die Additionseinheit 4 den Ausgang 44.

Zur Zeit t 1 erscheint ein Wert des ersten Signales am Eingang 45 und der Koeffizientengenerator 5 gibt je einen Filterkoeffizienten 47, 48 und 49 an die Multiplikationseinheiten 6,7, und 8 ab. Die Multiplikationseinheiten 9, 11, 12 und 13 erhalten weiterhin Filterkoeffizienten mit dem Wert 0. Die Multiplikationseinheit 10 erhält den Filterkoeffizienten 63, der aber auch Null beträgt. Am Ausgang 44 erscheint ein Wert, der aus drei aufeinanderfolgenden Werten des ersten Signales zusammengesetzt ist, wobei jeder dieser drei Werte mit einem der Filterkoeffizienten 47, 48 oder 49 multipliziert ist. Diejenigen Werte, die mit einem Filterkoeffizienten 48 oder 49 in den Multiplikationseinheiten 7 oder 8 multipliziert werden, werden den Speichern 14 und 15 entnommen und sind somit ältere Werte.

Nach einem weiteren Abtastintervall, zur Zeit t 11, sind die Werte des ersten Signales in den Speichern 14, 15 und 16 um einen Wert verschoben worden, denn es ist ein neuer Wert am Eingang 45 eingetroffen. Am Eingang 46 ist ein Wert des zweiten Signales eingetroffen. Die Multiplikationseinheiten 6, 7, 8 und 10 erhalten gleichzeitig je einen Filterkoeffizienten 53, 54, 55 und 56. Die übrigen Multiplikationseinheiten erhalten Filterkoeffizienten mit dem Wert 0. Am Ausgang 44 erscheint ein Wert, der aus drei zeitlich aufeinanderfolgenden Werten des ersten Signales und aus einem Wert des zweiten Signales in der Additionseinheit 4 zusammengesetzt worden ist.

Nach einem weiteren Abtastintervall, zur Zeit t 12 erhalten die Multiplikationseinheiten 6, 7, 8, 10 und 11 je einen Filterkoeffizienten 57, 58, 59, 60 und 61. Diese dienen in bekannter Weise zum Multiplizieren der Werte des ersten und des zweiten Signales. Am Ausgang 44 erscheint somit wieder ein Wert, der aus Werten der beiden Signale zusammengesetzt ist.

Am Ende des Ueberblendungsintervalles, zur Zeit t 2, erscheint sinngemäss am Ausgang 44 ein Wert, der aus drei aufeinanderfolgenden Werten des zweiten Signales zusammengesetzt ist, und zwar anteilmässig entsprechend den Werten der Filterkoeffizienten 50, 51 und 52. Da der Filterkoeffizient 62, der zur Multiplikation des letzten Wertes des ersten Signales verwendet wird, gleich Null ist, enthält der Wert am Ausgang 44 nichts mehr vom ersten Signal.

Nach der Zeit t 2 erhält beispielsweise nur noch die Multiplikationseinheit 10 einen Filterkoeffizienten mit einem Wert, der nicht Null entspricht. Der Ausgang 44 erhält nur noch Werte des zweiten Signales.

Dadurch, dass das Filter 2 oder 3 mindestens einen Speicher, der als Verzögerungseinheit wirkt, sowie eine Additionseinheit 4 aufweist, kann das Frequenzspektrum der Signale durch die Wahl der Filterkoeffizienten beeinflusst werden. Wie dies geschehen kann, ist aus der Theorie der digitalen Filter bekannt. Dabei ist zu bedenken, dass im Falle eines Audiosignales, das üblicherweise zuerst in analoger Form vorliegt, das dann zur Verarbeitung zu einem digitalen Signal umgewandelt wird, und das schliesslich wieder in ein analoges Signal zurückgewandelt wird, der Frequenzgang des wieder zurückverwandelten analogen Signales von Bedeutung für den Hörer ist. Durch die Verarbeitung der digitalen Signale in den Filtern 2 oder 3 in der beschriebenen Art, werden die einzelnen aufeinanderfolgenden Werte des einen oder anderen digitalen Signales so untereinander verknüpft, dass das daraus entstehende zurückverwandelte analoge Signal ein verändertes Frequenzspektrum aufweist.

In diesem Beispiel erhalten nie alle Multiplikationseinheiten Filterkoeffizienten die nicht gleich Null sind. Dies kann aber auch anders gewählt werden. Der Koeffizientengenerator kann beispielsweise so programmiert werden, dass er Filterkoeffizienten abgibt, die für das eine oder beide Signale eine Hochpass-, eine Bandpass-, oder eine Tiefpasscharakteristik ergibt. Desto mehr Speicher und Multiplikationseinheiten das verwendete Filter aufweist, desto grösser sind die Möglichkeiten, eine beliebige Charakteristik zu erreichen.

Die Wirkung der Behandlung der Audiosignale in den Filtern 2 und 3 geht aus Figur 2 hervor. Aus den Figuren 2a, b, c, d, e erkennt man, wie der Frequenzgang des einen Audiosignales bis zur vollständigen Unterdrückung (Fig. 2e) aller Frequenzen des Signales verändert wird. Dasselbe erkennt man in den Figuren 2f, g, h, i, k für das andere Audiosignal bis es unverändert (Fig. 2k) oder allenfalls verzögert abgegeben wird.

Wie der Frequenzgang der beiden Audiosignale während der Dauer des Ueberblendintervalles verändert werden soll, wird durch die Filterkoeffizienten bzw. deren Folgen und deren geeigneten Kombination von Folgen bestimmt. Daraus ergeben sich eine sehr grosse Anzahl verschiedener Möglichkeiten, solche Ueberblendintervalle zu gestalten.

Es können auch drei oder mehrere Audiosignale während desselben Intervalles miteinander überblendet werden. Dazu braucht es eben drei oder mehr Filter oder ein Filter mit drei oder mehr Eingängen. Ebenso braucht es dazu drei Gruppen mit mehreren Folgen von Filterkoeffizienten.

Patentansprüche:

1. Verfahren zur Ueberblendung eines ersten digitalen Audiosignales durch ein weiteres digitales Audiosignal, dadurch gekennzeichnet, dass die Audiosignale in einem Filter (2, 3) gefiltert werden, und dass die gefilterten Audiosignale zu einem Ausgangssignal zusammengeführt werden.

2. Verfahren gemäss Anspruch 1, dadurch gekennzeichnet, dass Frequenzspektren der Audiosignale beim Filtern verändert werden, und dass die Veränderung der Frequenzspektren für jedes Audiosignal getrennt als Funktion der Zeit erfolgt.

3. Verfahren gemäss Anspruch 1, dadurch gekennzeichnet, dass für jedes der Audiosignale Folgen von Filterkoeffizienten (C) verwendet werden, wobei jede Folge mehrere zu verschiedenen Zeiten verwendete Filterkoeffizienten ($C_i$) enthält.

4. Verfahren gemäss Anspruch 3, dadurch gekennzeichnet, dass für das erste Audiosignal während eines Ueberblendungsvorganges, die Summe der Filterkoeffizienten ($C_i1$) aus den verschiedenen Folgen schrittweise von Eins bis Null verändert wird, und dass für das weitere Audiosignal während des Ueberblendungsvorganges die Summe der Filterkoeffizienten ($C_i2$) aus den verschiedenen Folgen schrittweise von Null bis Eins verändert wird.

5. Verfahren gemäss Anspruch 4, dadurch gekennzeichnet, dass die Summe der Filterkoeffizienten ($C_i1$, $C_i2$) aller Folgen zu jedem Zeitpunkt des Ueberblendungsvorganges Eins beträgt.

6. Verfahren gemäss Anspruch 3, dadurch gekennzeichnet, dass die Folgen der Filterkoeffizienten bezüglich einem Referenzzeitpunkt ($t_s$) symmetrisch verlaufen.

7. Verfahren gemäss Anspruch 3, dadurch gekennzeichnet, dass vor der Ueberblendung die Filterkoeffizienten ($C_{i1}$) derart lauten, dass das Filter (2) für das eine Audiosignal einer Verzögerungsschaltung mit Verzögerungen entsprechend k mal ein Abtastintervall und mit k = 0, 1, 2.... entspricht, und dass das Filter (3) für das andere Audiosignal Filterkoeffizienten ($C_{i2}$) erhält die alle Null sind, und dass nach der Ueberblendung das Filter (3) für das andere Audiosignal einer Verzögerungsschaltung entspricht und das Filter (2) für das eine Audiosignal Filterkoeffizienten erhält, die alle Null sind.

8. Vorrichtung zur Durchführung des Verfahrens gemäss Anspruch 1, gekennezichnet durch ein Filter (2) für das erste Audiosignal, ein Filter (3) für das weitere Audiosignal, einen Koeffizientengenerator (5), sowie eine gemeinsame Additionseinheit (4) für die Filter (2, 3).

9. Vorrichtung gemäss Anspruch 8, dadurch gekennzeichnet, dass ein einziges Filter (2, 3) mit mehreren Eingängen (45, 46) für mehrere Audiosignale vorgesehen ist.

10. Vorrichtung gemäss Anspruch 8 und 9, dadurch gekennzeichnet, dass ein Filter (2, 3) mehrere Multiplikationseinheiten (6 bis 13) und mehrere Speicher (14 bis 19) aufweist, wobei die Multiplikationseinheiten (6 bis 13) mit dem Koeffizientengenerator (5) verbunden sind und die Speicher (14, 15, 16 und 17, 18, 19) je ein Schieberegister bilden.

1/2

Fig.1

Fig.2a

Fig.2b

Fig.2c

Fig.2d

Fig.2e

Fig.2f

Fig.2g

Fig.2h

Fig.2i

Fig.2k

Fig.3a

Fig.3b

2/2   0158055

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 604 858 (DOI) <br> * Spalte 2, Zeilen 17-25; Spalte 5, Zeilen 32-55; Spalte 7, Zeilen 65-72 * | 1,2 | G 11 B 27/02 <br> H 04 H 7/00 |
| A | DE-A-3 041 207 (ROBERT BOSCH GmbH) <br> * Insgesamt * | 1 | |
| A | GB-A-1 410 916 (EMI, LTD.) <br> * Insgesamt * | 1 | |
| A | JOURNAL OF THE AUDIO ENGINEERING SOCIETY, Band 27, Nr. 10, Oktober 1979, Seiten 793-803, New York, US; G.W. McNALLY: "Microprocessor mixing and processing of digital audio signals" <br> * Insgesamt * | 1,2,8 | |
| D,A | US-A-4 327 382 (TANAKA) <br> * Figuren 2-4; Spalte 7, Zeile 15 - Spalte 10, Zeile 7 * | 1 | RECHERCHIERTE SACHGEBIETE (Int. Cl.4) <br><br> G 11 B <br> H 04 H 7/00 |
| A | DE-A-2 926 011 (TOKYO SHIBAURA DENKI K.K.) <br> * Seite 16, zweiter Absatz - Seite 18, Zeile 15; Figuren 9,10 * | 1 | |

Der vorliegende Recherchenbericht wurde für alle Patentansprüche erstellt.

| Recherchenort <br> DEN HAAG | Abschlußdatum der Recherche <br> 07-06-1985 | Prüfer <br> DAALMANS F.J. |
|---|---|---|

KATEGORIE DER GENANNTEN DOKUMENTEN

X : von besonderer Bedeutung allein betrachtet
Y : von besondere Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82